(19) Europäisches Patentamt
European Patent Office
Office européen des brevets

(11) **EP 3 804 209 B1**

(12) **EUROPÄISCHE PATENTSCHRIFT**

(45) Veröffentlichungstag und Bekanntmachung des Hinweises auf die Patenterteilung:
**22.11.2023 Patentblatt 2023/47**

(21) Anmeldenummer: **19732259.7**

(22) Anmeldetag: **06.06.2019**

(51) Internationale Patentklassifikation (IPC):
*H04L 9/00* *(2022.01)*    *H04L 9/06* *(2006.01)*
*G06F 21/72* *(2013.01)*

(52) Gemeinsame Patentklassifikation (CPC):
**H04L 9/004; G06F 21/72; H04L 9/0631**

(86) Internationale Anmeldenummer:
**PCT/EP2019/000178**

(87) Internationale Veröffentlichungsnummer:
**WO 2019/233626 (12.12.2019 Gazette 2019/50)**

(54) **VERFAHREN MIT SAFE-ERROR-ABWEHRMASSNAHME**

METHOD HAVING SAFE-ERROR DEFENSIVE MEASURE

PROCÉDÉ AVEC MESURE DE DÉFENSE SAFE-ERROR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2018 DE 102018004595**
**09.08.2018 DE 102018006313**

(43) Veröffentlichungstag der Anmeldung:
**14.04.2021 Patentblatt 2021/15**

(73) Patentinhaber: **Giesecke+Devrient ePayments GmbH**
**81677 München (DE)**

(72) Erfinder: **HEMME, Ludger**
**80809 München (DE)**

(74) Vertreter: **Giesecke + Devrient IP**
**Prinzregentenstraße 161**
**81677 München (DE)**

(56) Entgegenhaltungen:
**EP-A1- 2 466 782      EP-A2- 2 675 103**
**DE-A1-102004 008 901      US-A1- 2011 222 684**

**Beschreibung**

Gebiet der Erfindung

Die Erfindung betrifft ein gegen Safe-Error-Angriffe geschütztes Verfahren zum Durchführen einer kryptographischen Berechnung in einer Prozessoreinrichtung.

Prozessoreinrichtungen können als Chipkarten wie SIM-Karten oder Zahlungsverkehrskarten gestaltet sein, oder auch als Chipsets für größere Geräte wie z.B. Mobiltelefone. Eine Prozessoreinrichtung wie sie im Zusammenhang mit der Erfindung betrachtet wird, hat einen Prozessor, der dazu eingerichtet ist, eine kryptographischen Berechnung mit einem kryptographischen Schlüssel durchzuführen, und vorzugsweise ein Schlüsselregister, das für den Prozessor zugänglich ist, und in dem der kryptographische Schlüssel zur Durchführung der kryptographischen Berechnung zwischengespeichert wird. Die Prozessoreinrichtung kann insbesondere als speziell für einen kryptographischen Algorithmus eingerichteter Krypto-Koprozessor mit einem Schlüsselregister gestaltet sein, oder als Kombination eines allgemeinen Prozessors mit einem solchen Krypto-Koprozessor. Der Schlüssel muss zur Durchführung der kryptographischen Berechnung jeweils in das Schlüsselregister R geladen und dort zwischengespeichert werden. Als kryptographische Algorithmen sind beispielsweise bekannt der Advanced Encryption Standard AES und der Data Encryption Standard DES und weitere symmetrische kryptographische Algorithmen.

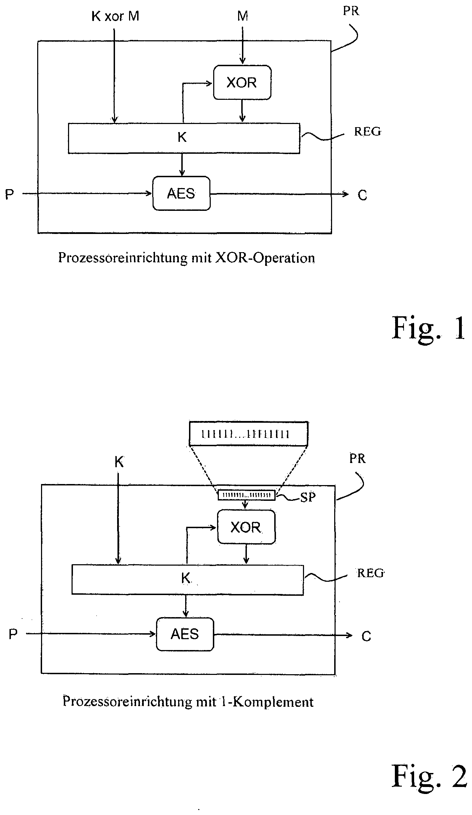

Manchen Schlüsselregistern ist eine XOR-Einheit zugeordnet, die dazu eingerichtet ist, im Schlüsselregister gespeicherte Daten und ein weiteres der XOR-Einheit zugeführtes Datum einer XOR-Operation zu unterziehen. Fig. 1 zeigt eine Prozessoreinrichtung PR, hier gestaltet als für AES eingerichteter Krypto-Koprozessor, mit einer AES-Einheit AES, einem Schlüsselregister REG und einer dem Schlüsselregister REG zugeordneten XOR-Einheit XOR. Die AES-Einheit (In Fig. 1 und Fig. 2 eine Verschlüsselungseinheit, alternativ z.B. eine Entschlüsselungseinheit), ist eingerichtet, einen der AES-Einheit zugeführten Plaintext P (oder allgemeiner Daten D) unter Verwendung eines im Schlüsselregister REG abgelegten Schlüssels K und unter Anwendung des AES-Algorithmus zu einem Ciphertext C (oder allgemeiner zu einem Ergebnis E) zu verarbeiten.

Die XOR-Einheit des Schlüsselregisters REG wird herkömmlicherweise beispielsweise dazu verwendet, um einen Schlüssel K in einer gegen Seitenkanalangriffe geschützten Weise in das Schlüsselregister zu laden. Hierzu werden, wie in Fig. 1 gezeigt, folgende Schritte durchgeführt:

    i) Lade den maskierten Schlüssel (K XOR M) in das Schlüsselregister, wobei M eine zufällige Maske ist.
    ii) VerXORe das Schlüsselregister mit M.
    iii) (K XOR M) XOR M ergibt K, so dass nun im Schlüsselregister REG der Schlüssel K in unmaskierter Form enthalten ist.

Der so erzeugte unmaskierte Schlüssel K wird der AES-Einheit zugeführt, um den Ciphertext C zu erzeugen. Dabei wurde außerhalb des Krypto-Koprozessors niemals mit dem unmaskierten Schlüssel K gearbeitet. Der Schlüssel K wird von außerhalb des Krypto-Koprozessors PR in das Schlüsselregister REG geladen. Die Maske M wird von außerhalb des Krypto-Koprozessors PR in den des Krypto-Koprozessor PR geladen.

Die XOR-Operation hat die Eigenschaft, dass VerXORung eines Datums D mit einem Wert W, der aus binär einer Folge von nur Einsen besteht, also 1111...111, das 1er-Komplement D', oder gleichbedeutend $\overline{D}$, ergibt. Im Folgenden wird für das 1er-Komplement eines Datums D meistens die Schreibweise D' verwendet, und nur ausnahmsweise, falls die Darstellbarkeit es erfordert, die Schreibweise 15. Dieser Sachverhalt wird anhand von Fig. 2 erläutert. Fig. 2 zeigt eine ähnliche Prozessoreinrichtung PR wie die in Fig. 1 gezeigte, mit dem Unterschied, dass die Prozessoreinrichtung PR zusätzlich einen innerhalb der Prozessoreinrichtung PR, also innerhalb des Krypto-Koprozessors, angeordneten Speicher SP hat, in dem ein Datum abgespeichert ist, das aus binär lauter Einsen besteht, und der der XOR-Einheit zugeordnet ist. Die Kombination aus dem Speicher SP mit den Einsen und der XOR-Einheit bildet eine 1er-Komplementierungs-Einheit. Wird nun auf einen im Schlüsselregister REG abgelegten Schlüssel K die XOR-Einheit angewandt, wird der Schlüssel K mit 111...111 verXORt und dadurch der Komplementärschlüssel K' erzeugt und zurück in das Schlüsselregister REG geschrieben. Wird der nun im Schlüsselregister REG abgelegte Komplementärschlüssel K' der XOR-Einheit zugeführt und dort verarbeitet, wird dessen 1er-Komplement erzeugt und zurück in das Schlüsselregister REG geschrieben, so dass im Schlüsselregister REG nun wieder der nicht-komplementierte ursprüngliche Schlüssel K abgelegt ist.

Angriffsmodell

Ein Angreifer hat mit geeigneten Methoden das Layout einer Prozessoreinrichtung analysiert und die Koordinaten einzelner Schlüsselbits im Schlüsselregister ermittelt. Ein Angreifer kann mit einer Störung jeweils ein Schlüsselbit entweder in ausschließlich eine Richtung (von Null nach Eins oder von Eins nach Null) oder in beide Richtungen verändern. Die Eigenschaft ein Schlüsselbit wahlweise auf 0 oder 1 zu setzen, wird entweder durch Störparameter (z.B. Energie und Pulslänge) oder durch den Ort der Störung bestimmt. Da der Angreifer bei der Analyse die Schlüsselbits selbst setzen kann, besitzt er am Ende der Analyse einen Satz von Chipkoordinaten / Störparametern, die jedem Schlüsselbit zugeordnet werden können. Dieser Angriff funktioniert am besten zu einem Zeitpunkt da der Schlüssel noch nicht benutzt aber bereits in das Schlüsselregister geladen wurde. Der Angreifer kann erkennen, ob die Rechnung gestört wurde. Insbesondere kann er erkennen, wenn die Prozessoreinrichtung selbst eine Störung feststellt.

"Safe Error" Angriffe

Der Angreifer stößt eine Verschlüsselung an und setzt nach dem Laden des Schlüssels und vor dem Beginn der Berechnung das erste Bit des Schlüsselregisters auf 0. Dann beobachtet er, ob das zu einer Störung der Rechnung führt. Falls ja, hat das erste Bit des Schlüssels den Wert 1, falls nicht, hat es den Wert 0. Das wiederholt der Angreifer für alle Bits des Schlüsselregisters. Der entscheidende Punkt ist, dass allein das Feststellen der Störung durch die Prozessoreinrichtung den Angriff nicht verhindert, sondern dem Angreifer die entscheidende Information liefert. Mit Kenntnis des Satzes der Chipkoordinaten /Störparameter kann der Angreifer gezielt jedes Schlüsselbit angreifen und anhand der Reaktion der Prozessoreinrichtung die Schlüsselinformation, d.h. den Schlüssel, ermitteln.

Stand der Technik

Das Dokument EP 2675103 A2 offenbart ein gegen Safe-Error-Angriffe geschütztes Verfahren zum Durchführen einer kryptographischen Berechnung unter Verwendung eines kryptographischen Schlüssels, bei dem als Gegenmaßnahme gegen Safe-Error-Angriffe die Berechnung zufallsgesteuert mit dem Schlüssel oder dem 1er-Komplement des Schlüssels durchgeführt wird.

Das Dokument US20110103584A1 (US8453238B2) offenbart Verfahren, bei dem eine Berechnung zufallsgesteuert mit einem Schlüssel K oder dessen 1er-Komplement K' durchgeführt wird und mit dem Schlüssel K erzeugte Rechenergebnisse verglichen werden mit Rechenergebnissen, die mit dem Komplementärschlüssel K' erzeugt worden sind. Die in US20110103584A1 offenbarte konkrete Umsetzung des Verfahrens setzt einen Algorithmus mit Komplementierungs-Eigenschaft voraus, wie beispielsweise den Data Encryption Standard DES. In der nachfolgenden Formel wird zugunsten besserer Darstellbarkeit ausnahmsweise das Komplement des Schlüssels K mit $\overline{K}$ bezeichnet und das Komplement des Plaintext P mit $\overline{P}$.

(1) Komplementierungseigenschaft: $DES_K(P) = \overline{DES_{\overline{K}}(\overline{P})}$ Denn nur in einem Algorithmus mit Komplementierungseigenschaft können mit dem Schlüssel K und dem Komplementär-Schlüssel K' (= $\overline{K}$) erzeugte Rechenergebnisse miteinander verglichen werden. Daher ist das in US 2011/ 0103584 A1 offenbarte Verfahren auf Algorithmen ohne Komplementierungs-Eigenschaft, wie beispielsweise den Advanced Encryption Standard AES, nicht anwendbar.

Zusammenfassung der Erfindung

Der Erfindung liegt die Aufgabe zu Grunde, ein Verfahren zur gegen Angriffe geschützten Durchführung einer kryptographischen Berechnung in einer Prozessoreinrichtung zu schaffen, bei der Berechnungen mit einem kryptographischen Schlüssel und dem zum Schlüssel komplementären Komplementär-Schlüssel durchgeführt werden, und das auch auf Algorithmen ohne Komplementierungs-Eigenschaft anwendbar ist, bei gleichzeitiger Gewährung eines guten Schutzes gegen Angriffe, insbesondere Safe-Error-Angriffe.

Weiter sollen Lösungen angegeben werden, die einen Schutz gegen Safe-Error-Angriffe mit einer einzelnen Störung, mit bis zu zwei Störungen desselben Bits, mit bis zu drei Störungen desselben Bits, mit bis zu 2n Störungen desselben Bits, und mit bis zu 2n+1 Störungen desselben Bits bieten.

Die Aufgabe wird gelöst durch ein Verfahren nach Anspruch 1. Vorteilhafte Ausgestaltungen der Erfindung sind in den abhängigen Ansprüchen angegeben.

Bei der Ergebnis-basierten Lösung gemäß Anspruch 1 werden zwei oder mehr Schlüssel-Ergebnisse auf Übereinstimmung miteinander verglichen und zwei oder mehr Komplementär-Schlüssel-Ergebnisse auf Übereinstimmung miteinander verglichen. Hingegen werden niemals Schlüssel-Ergebnisse mit Komplementär-Schlüssel-Ergebnissen verglichen. Hierdurch ist das Verfahren auch auf Algorithmen ohne Komplementierungs-Eigenschaft anwendbar.

Im Übereinstimmungsfall wird das Schlüssel-Ergebnis als Ergebnis der Berechnung (Ergebnis des Algorithmus) verwendet. Das Komplementär-Schlüssel-Ergebnis wird verworfen, da es zur Erzeugung des Ergebnisses nicht verwendbar ist. Falls in mindestens einer der Überprüfungen festgestellt wird, dass keine Übereinstimmung besteht, wird die Ausgabe eines Ergebnisses unterbunden. Zusätzlich kann statt der Ausgabe des Ergebnisses Ausgabe eines Fehlercodes erfolgen, beispielsweise einer wertlosen Bitfolge, beispielsweise einer zufälligen Bitfolge.

Das Ergebnis-basierte Verfahren ist, wie weiter unten anhand der Ausführungsbeispiele 2 und 4 beschrieben ist, gegen 2-fache Störungen, oder genereller gegen 2n-fache Störungen, bei guter Effizienz wirksamer als beispielsweise das Verfahren in EP 2675103 A2. Denn wie bei Ausführungsbeispiel 2 erläutert, wirkt es gegen Störungen zu zwei beliebigen Zeitpunkten, während das Verfahren in EP 2675103 A2 nur gegen 2-fache Störungen wirkt, bei denen die erste im Bereich 2.1-2.2 (bzw. 3.1-3.2) und die zweite im Bereich 2.4-2.5 (bzw. 3.4-3.5) stattfindet. Stört ein Angreifer dagegen z.B. einmal im Bereich 2.4-2.5 (bzw. 3.4-3.5) und macht er diese Störung durch eine weitere Störung im Bereich 2.5-2.6 (bzw. 3.5-3.6) wieder rückgängig, so erhält er unterschiedliche Ergebnisse für die Fälle j=0 bzw. j=1, aus denen er wiederum Rückschlüsse auf das entsprechende Bit von K ziehen kann.

Wie anhand von Ausführungsbeispiel 1 weiter unten beschrieben, ist dieses Verfahren gegen 1-fache Störungen besonders effizient, da es mit nur einer einzigen Konsistenzprüfung von R auskommt, beispielsweise im Vergleich zum Verfahren aus Dokument EP 2675103 A2, welches zwei Konsistenzprüfungen benötigt.

Werden sowohl Ergebnisse gemäß Anspruch 1 als auch Schlüssel gemäß Anspruch 2 überprüft, so resultiert eine Ergebnis-Schlüssel-basierte Lösung. Wie anhand von Ausführungsbeispielen 3 und 5 zu erkennen ist, ist es bei einer ungeraden Anzahl von Störungen, die größer als eins ist, d.h. drei oder allgemeiner 2n+1 Störungen, vorteilhaft, Ergebnis-basierte Lösung und Schlüssel-basierte Lösung beide gleichermaßen anzuwenden.

Gemäß Anspruch 4 wird eine besonders effiziente Variante eines Verfahrens für eine Schlüssel-basierte Lösung angegeben (auch anwendbar auf die Ergebnis-Schlüssel-basierte Lösung). Hierbei wird immer abwechselnd mit dem Schlüssel und dem Komplementär-Schlüssel gerechnet, und Schlüssel und Komplementär-Schlüssel jeweils auseinander abgeleitet durch Komplementierung des jeweils anderen Schlüssels, z.B. mittels einer XOR-Operation. Hierdurch ist es möglich, zu jedem Zeitpunkt nur den jeweils zur Berechnung benötigten Schlüssel - Originalschlüssel oder Komplementärschlüssel - bereitzuhalten. Hingegen ist es nicht erforderlich, beide Schlüssel - Originalschlüssel oder Komplementärschlüssel - gleichzeitig bereitzuhalten. Bei der ersten Schlüssel-Anwendung wird der Schlüssel festgelegt, beispielsweise zufällig.

Manche Prozessoreinrichtungen (Hauptprozessoren, Koprozessoren, Krypto-Koprozessoren), wie beispielsweise in Fig. 1 und Fig. 2 gezeigt, haben Schlüsselregister, denen eine XOR-Einheit zugeordnet ist. Bei einer Ausführungsform der Erfindung wird von einer Prozessoreinrichtung mit einem solchen Schlüsselregister mit XOR-Einheit ausgegangen. In diesem Fall wird zu Beginn einer Berechnung der Schlüssel oder der Komplementär-Schlüssel in das Schlüsselregister geladen, beispielsweise zufallsgesteuert der eine oder der andere Schlüssel. Danach wird mit dem Schlüsselregisterinhalt gerechnet. Danach wird der Schlüsselregisterinhalt mit einem Komplementierungselement, das aus binär nur Einsen gebildet ist (also 1111...111 bzw. 0b1111...111, mit vorangestelltem 0b um zu kennzeichnen dass das Zahlenformat das Binärformat ist), durch die XOR-Einheit verXORt und zurück in das Schlüsselregister geschrieben und wieder mit dem Schlüsselregisterinhalt gerechnet usw.. Hierdurch wird in der Prozessoreinrichtung immer abwechselnd je einmal mit dem Schlüssel und einmal dem Komplementärschlüssel gerechnet. Auf diese Weise lassen sich mehrere Rechenergebnisse mit dem Schlüssel und mehrere Rechenergebnisse mit dem Komplementär-Schlüssel erzeugen, unter Einsatz nur eines einzigen Schlüsselregisters. Das mit einem Komplementierungselement, das aus binär nur Einsen gebildet ist, kann wahlweise im Binärformat dargestellt sein, so dass es tatsächlich aus lauter Einsen besteht, oder alternativ in einem anderen Zahlenformat, beispielsweise dem Hexadezimalformat.

Das Komplementierungselement kann dem Schlüsselregister zugeführt werden: entweder von außerhalb der Prozessoreinrichtung, entsprechend dem Beispiel aus Figur 1, oder aus einem innerhalb der Prozessoreinrichtung eingerichteten Speicher, entsprechend dem Beispiel aus Figur 2. Der Speicher ist vorzugsweise ein Permanentspeicher, in dem das Komplementierungselement, das aus binär nur Einsen gebildet ist, permanent (nicht-flüchtig) gespeichert ist, z.B. ein Flash-, EEPROM, ROM, ... Speicher.

Kurze Beschreibung der Zeichnungen

Im Folgenden werden die Zeichnungen erläutert, in denen zeigen:

Fig. 1 eine Prozessoreinheit mit einer XOR-Einheit, geeignet für den Einsatz im Zusammenhang mit der Erfindung;
Fig. 2 eine weitere Prozessoreinheit mit einer XOR-Einheit und einem Speicher, geeignet für den Einsatz im Zusammenhang mit der Erfindung;
Fig. 3 ein Schaubild zur Veranschaulichung eines Verfahrens zum Durchführen eines AES mit einer Abwehrmaßnahme gegen Safe-Error-Angriffe mit nur einer einzelnen Störung, gemäß Ausführungsbeispiel 1;
Fig. 4 ein Schaubild zur Veranschaulichung eines Verfahrens zum Durchführen eines AES mit einer Abwehrmaßnahme gegen Safe-Error-Angriffe mit bis zu zwei Störungen desselben Bits, gemäß Ausführungsbeispiel 2;
Fig. 5 ein Schaubild zur Veranschaulichung eines Verfahrens zum Durchführen eines AES mit einer Abwehrmaßnahme gegen Safe-Error-Angriffe mit bis zu drei Störungen desselben Bits, gemäß Ausführungsbeispiel 3.

Detaillierte Beschreibung von Ausführungsbeispielen

Im Folgenden wird die Erfindung anhand von fünf Ausführungsbeispielen 1-5 und der Zeichnungen erläutert. Alle Ausführungsbeispiele nutzen eine Prozessoreinheit mit einer AES-Einheit und einem Schlüsselregister REG, das erlaubt, den Schlüsselregisterinhalt (oder gleichbedeutend "das Schlüsselregister") mittels einer zugeordneten XOR-Einheit zu komplementieren. Gemäß den Ausführungsbeispielen 1-5 wird ein Verschlüsselungsverfahren VV durchgeführt, hier der Advanced Encryption Standard AES, und jeweils eine Abwehrmaßnahme angewandt. Auf andere Verschlüsselungsverfahren VV als den AES, z.B. auf den DES, ist die Erfindung analog anwendbar.

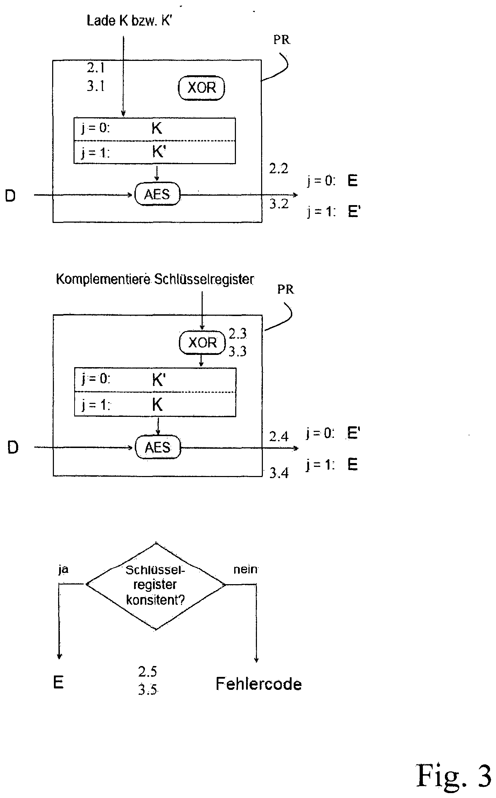

Ausführungsbeispiel 1 zeigt ein Beispiel für eine Schlüssel-basierte Abwehrmaßnahme (Anspruch 3; Figur 3):

**1. Abwehrmaßnahme gegen "Safe Error" Angriffe mit einer einzelnen Störung**

Eine Berechnung des Verschlüsselungsverfahrens VV zur Verschlüsselung eines Datums D wird wie folgt durchgeführt:

1. Das Gerät wählt zufällig j = 0 oder j = 1
2. Falls j = 0:

    2.1. Der Schlüssel K wird in das Schlüsselregister R geladen
    2.2. VV wird durchgeführt für Datum D → Ergebnis E
    2.3. R wird verXORt mit 0b11 ... 1, so dass R das bitweise Komplement K' von K enthält
    2.4. VV wird durchgeführt für Datum D → Ergebnis E'
    2.5. R wird auf Manipulation geprüft

Falls R konsistent ist, wird E ausgegeben, andernfalls ein Fehlercode
3. Falls j = 1:

    3.1. Das bitweise Komplement K' von K wird nach R geladen
    3.2. VV wird durchgeführt für Datum D → Ergebnis E'
    3.3. R wird verXORt mit 0b11 ... 1, sodass R den Schlüssel K enthält
    3.4. VV wird durchgeführt für Datum D → Ergebnis E
    3.5. R wird auf Manipulation geprüft

Falls R konsistent ist, wird E ausgegeben, andernfalls ein Fehlercode

Die Überprüfung von R in 2.5 bzw. 3.5 kann z.B. mit folgenden bereits bekannten Verfahren erfolgen:

1. Falls das Schlüsselregister R lesbar ist, so kann man dieses auslesen und mit einem Referenzwert für K bzw. K' vergleichen.

2. Falls man eine Checksumme über das Schlüsselregister berechnen kann, so kann man diese in nach Schritt 2.4 bzw. 3.5 berechnen und mit einem zuvor oder danach berechneten Referenzwert vergleichen.

3. Man kann nach Schritt 2.4 bzw. 3.4 das Verfahren VV für ein Referenzdatum durchführen (unter Verwendung des aktuell geladenen (evtl. manipulierten Schlüssels) K bzw. K' und das Ergebnis mit einem zuvor oder danach berechneten Referenzergebnis vergleichen.

**Begründung der Wirksamkeit:**

Versucht der Angreifer an einem bestimmten Punkt zwischen 2.1 und 0 bzw. zwischen 3.1 und 3.5 ein bestimmtes Bit im Schlüsselregister R zu stören, so erhält er in beiden Fällen (j=0 / j=1) einen Fehlercode, falls die Störung erfolgreich war. Falls die Störung nicht erfolgreich war, erhält er in beiden Fällen (j=0 / j=1) das korrekte Ergebnis E. Er kann also aus seiner Beobachtung nicht entscheiden, ob er sich im Fall j=0 oder j=1 befindet. Somit kann er keinen Rückschluss auf den Wert eines Bits von K ziehen, da er nicht weiß, ob R gerade den Schlüssel K oder das Komplement K' enthält.

**Grenzen der Wirksamkeit:**

Bei zwei Störungen desselben Bits kann die eben beschriebene Abwehrmaßnahme versagen. Kippt der Angreifer z.B. ein bestimmtes Bit in Schritt 2.3 bzw. 3.3 und behebt die Störung wieder durch ein weiteres Kippen desselben Bits zu Beginn von Schritt 2.5 bzw. 3.5 (vor der Überprüfung), so erkennt die Überprüfung keine Inkonsistenz und gibt im Fall j=0 das ungestörte Ergebnis E aus, während es im Fall j=1 ein gestörtes Ergebnis ε ausgibt. Der Angreifer kann nun also entscheiden, in welchem der beiden Fälle (j=0 / j=1) er sich befindet und kann somit auch Rückschlüsse auf das entsprechende Bit des Schlüssels K ziehen.

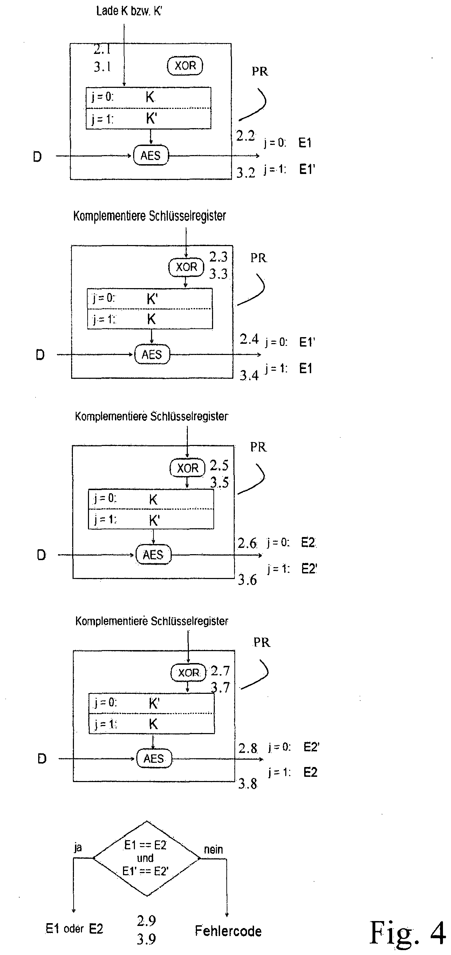

Ausführungsbeispiel 2 zeigt ein Beispiel für die Ergebnis-basierte Abwehrmaßnahme (Anspruch 2; Figur 4):

**2. Abwehrmaßnahme gegen "Safe Error" Angriffe mit bis zu zwei Störungen desselben Bits**

Eine Berechnung des Verschlüsselungsverfahrens VV zur Verschlüsselung eines Datums D wird wie folgt durchgeführt:

1. Das Gerät wählt zufällig j = 0 oder j = 1
2. Falls j = 0:

    2.1. Der Schlüssel K wird in das Schlüsselregister R geladen
    2.2. VV wird durchgeführt für Datum D $\rightarrow$ Ergebnis $E_1$
    2.3. R wird verXORt mit 0b11...1, so dass R das bitweise Komplement K' von K enthält
    2.4. VV wird durchgeführt für Datum D $\rightarrow$ Ergebnis $E'_1$
    2.5. R wird verXORt mit 0b11...1, so dass R den Schlüssel K enthält
    2.6. VV wird durchgeführt für Datum D $\rightarrow$ Ergebnis $E_2$
    2.7. R wird verXORt mit 0b11...1, so dass R das bitweise Komplement K' von K enthält
    2.8. VV wird durchgeführt für Datum D $\rightarrow$ Ergebnis $E'_2$
    2.9. Falls $E_1 = E_2$ und $E'_1 = E'_2$ ist,

so wird das Ergebnis $E_1$ (oder $E_2$) ausgegeben, andernfalls ein Fehlercode

3. Falls j = 1:

    3.1. Das bitweise Komplement K' des Schlüssel K wird in das Schlüsselregister R geladen
    3.2. VV wird durchgeführt für Datum D $\rightarrow$ Ergebnis $E'_1$
    3.3. R wird verXORt mit 0b11...1, so dass R den Schlüssel K enthält
    3.4. VV wird durchgeführt für Datum D $\rightarrow$ Ergebnis $E_1$
    3.5. R wird verXORt mit 0b11...1, so dass R das bitweise Komplement K' von K enthält
    3.6. VV wird durchgeführt für Datum D $\rightarrow$ Ergebnis $E'_2$
    3.7. R wird verXORt mit 0b11...1, so dass R den Schlüssel K enthält
    3.8. VV wird durchgeführt für Datum D $\rightarrow$ Ergebnis $E_2$
    3.9. Falls $E1 = E_2$ und $E'_1 = E'_2$ ist,

so wird das Ergebnis $E_1$ (oder $E_2$) ausgegeben, andernfalls ein Fehlercode

**Begründung der Wirksamkeit:**

Ein Angreifer versuche nun, ein bestimmtes Bit des Schlüsselregisters R an bis zu zwei Zeitpunkten zwischen 2.1 und 2.9 bzw. zwischen 3.1 und 3.9 zu stören. Um zu verstehen, warum er damit keine Informationen über den Schlüssel K erhält, betrachten wir die verschiedenen Phasen im Leben des Schlüsselregisters R während des gerade beschriebenen Verfahrens für die Fälle j=0 und j=1:

| Phase | 1 | 2 | 3 | 4 |
|---|---|---|---|---|
| | 2.1-2.2 bzw. 3.1-3.2 | 2.3-2.4 bzw. 3.3-3.4 | 2.5-2.6 bzw. 3.5-3.6 | 2.7-2.9 bzw. 3.7-3.9 |
| Inhalt von R (j=0) | K | K' | K | K' |
| Inhalt von R (j=1) | K' | K | K' | K |

Die Störung eines Bits in Phase i wirkt sich zunächst so aus, dass das Ergebnis der Durchführung von VV in Phase i gestört ist. Da während des Verfahrens das Schlüsselregister nur mit 0b11 ...1 verXORt wird und nicht etwa neu geladen wird, bleibt der erzeugte Fehler erhalten und wirkt sich auch auf alle folgenden Durchführungen von VV aus, die ebenfalls ein gestörtes Ergebnis liefern. Wird das Bit jedoch danach noch einmal gestört, so wird die erste Störung wieder behoben und VV liefert ab diesem Zeitpunkt wieder ungestörte Ergebnisse.

Nun betrachten wir für bis zu zwei erfolgreiche Störungen eines bestimmten Bits das jeweils vom Angreifer beobachtete Ergebnis.

| Störung in Phase ... | - | 1 | 2 | 3 | 4 | 1+2 | 1+3 | 1+4 | 2+3 | 2+4 | 3+4 |
|---|---|---|---|---|---|---|---|---|---|---|---|
| Ergebnis für j=0 | ✓ | fe | fc | fc | fc | fc | fc | fc | fc | fc | fc |
| Ergebnis für j=1 | ✓ | fe | fc | fc | fc | fc | fc | fc | fc | fc | fc |

✓: Ausgabe des ungestörten Ergebnisses E
fe: Ausgabe eines gestörten Ergebnisses $\varepsilon$
fc: Ausgabe eines Fehlercodes

Zur Verdeutlichung der Tabelle drei beispielhafte Erklärungen:
Wird bei den Störversuchen des Angreifers kein Bit gekippt (Spalte "-"), so wird in beiden Fällen (j=0 / j=1) das ungestörte Ergebnis $E=E_1$ ausgegeben.

Wird z.B. ein Bit während Phase 1 gekippt, so sind alle vier Ergebnisse $E_1$, $E_2$, $E'_1$, $E'_2$ fehlerhaft, und zwar derart, dass die Überprüfung in 2.9 bzw. 3.9 keine Inkonsistenz erkennt und das fehlerbehaftete Ergebnis $\varepsilon=E_1$ ausgibt.

Wird z.B. ein Bit während Phase 1 gekippt und während Phase 2 wieder gekippt, so ist für j=0 das Ergebnis $E_1$ fehlerhaft, die Ergebnisse $E'_1$, $E_2$, $E'_2$ jedoch ungestört, so dass die Überprüfung in 2.9 eine Inkonsistenz feststellt und die Ausgabe eines Fehlercodes veranlasst. Analog für j=1.

Der Angreifer erhält nun deswegen keine Information über ein Bit von K, da die Tabellenzeilen für j=0 und j=1 identisch sind. Jedes beobachtete Ergebnis kann damit nämlich sowohl durch eine Störung eines Bits von K als auch durch die Störung des entsprechenden Bits von K' entstanden sein.

**Grenzen der Wirksamkeit:**

Bei drei oder vier Störungen desselben Bits kann die eben beschriebene Abwehrmaßnahme versagen, wie man an der entsprechenden Tabelle sieht:

| Störung in Phase ... | 1+2+3 | 2+3+4 | 1 +2+3+4 |
|---|---|---|---|
| Ergebnis für j=0 | fc | ✓ | fe |
| Ergebnis für j=1 | fc | fe | ✓ |

Kippt z.B. ein bestimmtes Bit in den Phasen 2, 3 und 4, so sind im Fall j=0 die Ergebnisse $E_1$, $E_2$ ungestört und die Ergebnisse $E'_1$, $E'_2$ gestört, und zwar derart, dass die Überprüfung in 2.9 keine Inkonsistenz erkennt und somit ein ungestörtes Ergebnis $E=E_1$ ausgibt. Im Fall j=1 dagegen sind die Ergebnisse $E'_1$, $E'_2$ ungestört und die Ergebnisse $E_1$, $E_2$ gestört, und zwar wieder so, dass die Überprüfung in 3.9 keine Inkonsistenz erkennt, diesmal jedoch ein gestörtes Ergebnis $E=E_1$ ausgibt. Die gesamte Tabelle für drei und vier Störungen sieht wie folgt aus:

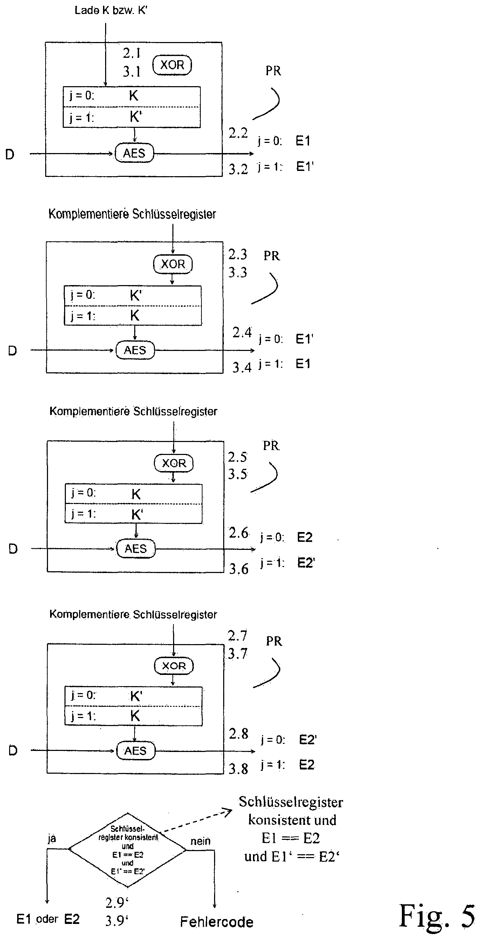

Ausführungsbeispiel 3 zeigt ein Beispiel für eine kombinierte Ergebnis-basierte und zusätzlich Schlüssel-basierte Abwehrmaßnahme (Figur 5):

**3. Abwehrmaßnahme gegen "Safe Error" Angriffe mit bis zu drei Störungen desselben Bits**

Eine Berechnung des Verschlüsselungsverfahrens VV zur Verschlüsselung eines Datums D wird durchgeführt wie in Abschnitt 0, mit der einzigen Änderung, dass die Schritte 2.9 und 3.9 jeweils durch den folgenden Schritt ersetzt werden:

2.9' bzw. 3.9'    R wird auf Manipulation geprüft.
Falls R konsistent und $E_1 = E_2$ und $E'_1 = E'_2$ ist, so wird das Ergebnis $E_1$ (oder $E_2$) ausgegeben, andernfalls ein Fehler code

**Begründung der Wirksamkeit:**

Die zu diesem Verfahren gehörige Ergebnistabelle für bis zu vier Störungen sieht wie folgt aus:

| Störung in Phase ... | - | 1 | 2 | ... | 3+4 | 1+2+3 | 2+3+4 | 1 +2+3+4 |
|---|---|---|---|---|---|---|---|---|
| Ergebnis für j=0 | ✓ | fc | fc | fc | fc | fc | fc | fe |
| Ergebnis für j=1 | ✓ | fc | fc | fc | fc | fc | fc | ✓ |

Da durch die zusätzliche Überprüfung des Schlüsselregisters in Schritt 2.9' und 3.9' die Zeilen der Tabelle für bis zu drei Störungen wieder identisch sind, kann man wie in Abschnitt 0 argumentieren, dass der Angreifer mit bis zu drei Störungen keine Informationen über die Bits von K erhält.

**Grenzen der Wirksamkeit:**

Bei vier Störungen desselben Bits kann die eben beschriebene Abwehrmaßnahme versagen, wie man an der Asymmetrie der letzten Spalte der obigen Tabelle sieht.

Ausführungsbeispiel 4 zeigt ein Beispiel für die Ergebnis-basierte Abwehrmaßnahme, das gegenüber Ausführungsbeispiel 2 eine Verallgemeinerung darstellt (Anspruch 2):

**4. Abwehrmaßnahme gegen "Safe Error" Angriffe mit bis zu 2n Störungen desselben Bits (n>=2)**

Eine Berechnung des Verschlüsselungsverfahrens VV zur Verschlüsselung eines Datums D wird wie folgt durchgeführt:

1. Das Gerät wählt zufällig j = 0 oder j = 1
2. Falls j = 0:

    2.1. Der Schlüssel K wird in das Schlüsselregister R geladen
    2.2. Für i = 1, 2, ..., n+1:

        2.2.1.VV wird durchgeführt für Datum D $\rightarrow$ Ergebnis $E_i$
        2.2.2.R wird verXORt mit 0b11...1, so dass R das bitweise Komplement K' von K enthält
        2.2.3.VV wird durchgeführt für Datum D $\rightarrow$ Ergebnis $E'_i$
        2.2.4.Falls i < n+1:

    R wird verXORt mit 0b11...1, so dass R den Schlüssel K enthält
    2.3. Falls $E_1 = E_2 = ... E_{n+1}$ und $E'_1 = E'_2 = ... = E'_{n+1}$ ist,
    so wird das Ergebnis $E_1$ ausgegeben, andernfalls ein Fehlercode

3. Falls j = 1:

    3.1. Das bitweise Komplement K' von K wird in das Schlüsselregister R geladen
    3.2. Für i = 1, 2, ..., n+1:

        3.2.1.VV wird durchgeführt für Datum D $\rightarrow$ Ergebnis $E'_i$
        3.2.2.R wird verXORt mit 0b11...1, so dass R den Schlüssel K enthält
        3.2.3. VV wird durchgeführt für Datum D $\rightarrow$ Ergebnis $E_i$
        3.2.4.Falls i < n+1:

    R wird verXORt mit 0b11...1, so dass R das bitweise Komplement K' von K enthält
    3.3. Falls $E_1 = E_2 = ... E_{n+1}$ und $E'_1 = E'_2 = ... = E'_{n+1}$ ist,
    so wird das Ergebnis $E_1$ ausgegeben, andernfalls ein Fehlercode

**Begründung der Wirksamkeit:**

Das Verfahren ist eine Verallgemeinerung des in Abschnitt 0 beschriebenen Verfahrens. Die Begründung der Wirksamkeit verläuft analog zu Abschnitt 0.

**Grenzen der Wirksamkeit:**

Analog zu Abschnitt 0 kann das Verfahren bei 2n+1 Störungen versagen.

Ausführungsbeispiel 5 zeigt ein Beispiel für eine kombinierte Ergebnis-basierte und zusätzlich Schlüssel-basierte Abwehrmaßnahme, das gegenüber Ausführungsbeispiel 3 eine Verallgemeinerung darstellt:

**5. Abwehrmaßnahme gegen "Safe Error" Angriffe mit bis zu 2n+1 Störungen desselben Bits (n>=2)**

Eine Berechnung des Verschlüsselungsverfahrens VV zur Verschlüsselung eines Datums D wird durchgeführt wie in Abschnitt 4, mit der einzigen Änderung, dass die Schritte 2.3 und 3.3 jeweils durch den folgenden Schritt ersetzt werden:

2.3' bzw. 3.3'        R wird auf Manipulation geprüft.
Falls R konsistent und $E_1 = E_2 = ... E_{n+1}$ und $E'_1 = E'_2 = ... = E'_{n+1}$ ist, so wird das Ergebnis $E_1$ ausgegeben, andernfalls ein Fehlercode

**Begründung der Wirksamkeit:**

Analog zu Abschnitt 4.

**Grenzen der Wirksamkeit:**

Analog zu Abschnitt 4.

**Patentansprüche**

1.  Verfahren zur gegen Angriffe geschützten Durchführung einer kryptographischen Berechnung, die in einer Prozessoreinrichtung (PR) implementiert ist, wobei die kryptographische Berechnung dazu eingerichtet ist, durch Anwenden eines kryptographischen Algorithmus (AES) auf Eingabewerte, welche ein Datum (D) und einen kryptographischen Schlüssel (K) umfassen, um ein Rechenergebnis (E) des kryptographischen Algorithmus zu erzeugen, wobei Berechnungen mit dem Schlüssel (K) und dem zum Schlüssel komplementären Komplementär-Schlüssel (K') durchgeführt werden;
umfassend

(a) eine **Berechnungs-Maßnahme,** umfassend folgenden Schritte:

- zweimaliges oder mehrmaliges Durchführen der Berechnung mit dem Datum (D) und dem Schlüssel (K), um zwei oder mehr Schlüssel-Ergebnisse (EK1, EK2, ...) zu erzeugen,
- zweimaliges oder mehrmaliges Durchführen der Berechnung mit dem Datum (D) und dem Komplementär-Schlüssel (K'), um zwei oder mehr Komplementär-Schlüssel-Ergebnisse (EK1', EK2', ...) zu erzeugen, **gekennzeichnet durch**

(b) zum Schutz der Berechnung gegen Safe Error Angriffe, eine **Abwehr-Maßnahme,** die gestaltet ist als eine Ergebnis-Vergleichsmaßnahme umfassend:

- Vergleich der zwei oder mehr Schlüssel-Ergebnisse (EK1, EK2, ...) auf Übereinstimmung miteinander, und Vergleich der zwei oder mehr Komplementär-Schlüssel-Ergebnisse (EK1', EK2', ...) auf Übereinstimmung miteinander,
- im Fall der Übereinstimmung der zwei oder mehr Schlüssel-Ergebnisse (EK1, EK2, ...) und der zwei oder mehr Komplementär-Schlüssel-Ergebnisse (EK1', EK2', ...), Ausgabe eines der oder zumindest eines der Schlüssel-Ergebnisse (EK1, EK2, ...) als Ergebnis (E),
- andernfalls Unterbinden der Ausgabe eines Ergebnisses (E) und optional statt Ausgabe des Ergebnisses Ausgabe eines Fehlercodes.

**2.** Verfahren nach Anspruch 1, wobei die **Abwehr-Maßnahme** weiter eine Schlüssel-Überprüfungsmaßnahme umfasst, umfassend:

- Überprüfen des Schlüssels (K) und des Komplementär-Schlüssels (K') jeweils daraufhin, ob er manipuliert worden ist,
- im Fall, dass der Schlüssel (K) und der Komplementär-Schlüssel (K') gemäß der Überprüfung nicht manipuliert worden sind, Ausgabe eines der oder zumindest eines der Schlüssel-Ergebnisse (EK1, EK2, ...) als Ergebnis (E),
- andernfalls Unterbinden der Ausgabe eines Ergebnisses (E) und optional statt Ausgabe des Ergebnisses Ausgabe eines Fehlercodes.

**3.** Verfahren nach einem der vorangehenden Ansprüche, wobei die **Berechnungs-Maßnahme** umfasst, dass jeweils abwechselnd (i) ein Durchführen der Berechnung mit dem Datum (D) und dem Schlüssel (K) und (ii) ein Durchführen der Berechnung mit dem Datum (D) und dem Komplementär-Schlüssel (K') durchgeführt wird, wobei (iii) zu Beginn der Berechnungs-Maßnahme der Schlüssel (K) oder der Komplementär-Schlüssel (K') zur ersten Durchführung der Berechnung festgelegt wird und (iv) bei jeder nachfolgenden Durchführung der Berechnung der zu verwendende Schlüssel (K oder K') durch Komplementierung des Schlüssel (K' oder K) erzeugt wird, der bei der Durchführung der Berechnung gerade verwendet worden ist.

**4.** Verfahren nach Anspruch 3, wobei (iii) zu Beginn der Berechnungs-Maßnahme zufallsgesteuert der Schlüssel (K) oder der Komplementär-Schlüssel (K') zur ersten Durchführung der Berechnung festgelegt wird.

**5.** Verfahren nach Anspruch 3 oder 4, wobei die Prozessoreinrichtung ein Schlüsselregister und eine dem Schlüsselregister zugeordnete XOR-Einheit umfasst, und wobei:

- der gemäß (iii) festgelegte Schlüssel zu Beginn der Berechnungs-Maßnahme in ein Schlüsselregister geladen wird,
- beim Durchführen **Berechnungs-Maßnahme:**
- in (i) und (ii) das Durchführen der Berechnung mit dem Schlüssel (K) oder Komplementär-Schlüssel (K') durchgeführt wird, und
- in (iv) bei jeder nachfolgenden Durchführung der Berechnung der zu verwendende Schlüssel (K oder K') durch Komplementierung des Schlüssel (K' oder K) erzeugt wird, der bei der Durchführung der Berechnung gerade verwendet worden ist, indem der Schlüsselregisterinhalt und ein Komplementierungselement, das aus binär nur Einsen gebildet ist, der XOR-Einheit zugeführt wird, durch die XOR-Einheit daraus das Einer-Komplement des Schlüsselregisterinhalts erzeugt wird und das erzeugte Einer-Komplement in das Schlüsselregister zurück gespeichert wird,
- so dass insbesondere jede Durchführen der Berechnung mit dem Schlüssel (K) oder Komplementär-Schlüssel (K') durch Verwenden desselben Schlüsselregisters durchgeführt wird, welches abwechselnd mit dem Schlüssel (K) und dem Komplementär-Schlüssel (K') belegt (bespeichert) ist.

**6.** Verfahren nach Anspruch 5, wobei das Komplementierungselement dem Schlüsselregister zugeführt wird: entweder von außerhalb der Prozessoreinrichtung oder aus einem innerhalb der Prozessoreinrichtung eingerichteten Speicher.

**7.** Verfahren nach einem der vorangehenden Ansprüche, wobei die **Abwehr-Maßnahme** entweder nur eine Ergebnis-Vergleichsmaßnahme oder sowohl eine Ergebnis-Vergleichsmaßnahme als auch eine Schlüssel-Überprüfungsmaßnahme umfasst.

**8.** Verfahren nach einem der vorangehenden Ansprüche, wobei der kryptographische Algorithmus als Advanced Encryption Standard AES oder Data Encryption Standard DES oder ein anderer symmetrischer kryptographischer Algorithmus gestaltet ist.

**9.** Verfahren nach einem der vorangehenden Ansprüche, wobei die Durchführung der kryptographischen Berechnung als Verschlüsselung, Entschlüsselung, Signaturbildung oder Signaturprüfung gestaltet ist.

**Claims**

**1.** Method for performing a cryptographic calculation, which is implemented in a processor device (PR), in a manner protected against attacks, wherein the cryptographic calculation is configured, by applying a cryptographic algorithm (AES) to input values comprising a data item (D) and a cryptographic key (K), to generate a computational result (E) of the cryptographic algorithm, wherein calculations are performed with the key (K) and the complementary key (K) that is complementary to the key;
**characterized by**

(a) a **calculation measure** comprising the following steps:

- performing the calculation twice or more times with the data item (D) and the key (K) in order to generate two or more key results (EK1, EK2, ...),
- performing the calculation twice or more times with the data item (D) and the complementary key (K') in order to generate two or more complementary key results (EK1', EK2', ...),

(b) also, in order to protect the calculation from safe error attacks, a **defensive measure** which is in the form of a result comparison measure comprising:

- comparing the two or more key results (EK1, EK2, ...) for a match with one another, and comparing the two or more complementary key results (EK1', EK2', ...) for a match with one another,
- if the two or more key results (EK1, EK2, ...) and the two or more complementary key results (EK1', EK2', ...) match, outputting one or at least one of the key results (EK1, EK2, ...) as the result (E),
- otherwise preventing the output of a result (E) and optionally outputting an error code instead of outputting the result.

2. Method according to Claim 1, wherein the **defensive measure** also comprises a key checking measure comprising:

- checking the key (K) and the complementary key (K') in each case in order to determine whether it has been manipulated,
- if the key (K) and the complementary key (K') have not been manipulated according to the check, outputting one or at least one of the key results (EK1, EK2, ...) as the result (E),
- otherwise preventing the output of a result (E) and optionally outputting an error code instead of outputting the result.

3. Method according to one of the preceding claims, wherein the **calculation measure** comprises, in each case in alternation, (i) performing the calculation with the data item (D) and the key (K) and (ii) performing the calculation with the data item (D) and the complementary key (K'), wherein (iii) at the beginning of the calculation measure, the key (K) or the complementary key (K') is stipulated for the first performance of the calculation, and (iv) during each subsequent performance of the calculation, the key (K or K') to be used is generated by complementing the key (K' or K) which has just been used when performing the calculation.

4. Method according to Claim 3, wherein (iii) at the beginning of the calculation measure, the key (K) or the complementary key (K') is randomly stipulated for the first performance of the calculation.

5. Method according to Claim 3 or 4, wherein the processor device comprises a key register and an XOR unit assigned to the key register, and wherein:

- the key stipulated according to (iii) is loaded into a key register at the beginning of the calculation measure,
- when performing the **calculation measure:**
- the calculation is performed with the key (K) or the complementary key (K') in (i) and (ii), and
- during each subsequent performance of the calculation in (iv), the key (K or K') to be used is generated by complementing the key (K' or K) which has just been used when performing the calculation by supplying the key register content and a complementation element, which is formed only from binary ones, to the XOR unit, the XOR unit generating the one's complement of the key register content therefrom and the one's complement generated being stored back in the key register,
- with the result that, in particular, each performance of the calculation with the key (K) or complementary key (K') is performed by using the same key register which is alternately occupied by (has stored in it) the key (K) and the complementary key (K').

6. Method according to Claim 5, wherein the complementation element is supplied to the key register: either from outside the processor device or from a memory set up inside the processor device.

7. Method according to one of the preceding claims, wherein the **defensive measure** comprises either only a result comparison measure or both a result comparison measure and a key checking measure.

8. Method according to one of the preceding claims, wherein the cryptographic algorithm is configured as Advanced Encryption Standard AES or Data Encryption Standard DES or another symmetrical cryptographic algorithm.

9. Method according to one of the preceding claims, wherein the performance of the cryptographic calculation is configured as encryption, decryption, signature formation or signature verification.

**Revendications**

1. Procédé d'exécution protégée contre les attaques d'un calcul cryptographique, lequel est mis en œuvre dans un dispositif à processeur (PR), le calcul cryptographique étant conçu pour, en appliquant un algorithme cryptographique (AES) sur des valeurs d'entrée qui comportent une date (D) et une clé cryptographique (K), générer un résultat de calcul (E) de l'algorithme cryptographique, les calculs étant exécutés avec la clé (K) et la clé complémentaire (K') complémentaire à la clé ;
**caractérisé par**

(a) une mesure de calcul, comprenant les étapes suivantes :

- exécution deux ou plusieurs fois du calcul avec la date (D) et la clé (K) afin de générer deux résultats de clé (EK1, EK2, ...) ou plus,
- exécution deux ou plusieurs fois du calcul avec la date (D) et la clé complémentaire (K') afin de générer deux résultats de clé complémentaire (EK1', EK2', ...) ou plus,

(b) en outre, en vue de protéger le calcul contre les attaques Safe Error, une mesure de défense qui est conçue comme une mesure de comparaison des résultats comprenant :

- comparaison des deux résultats de clé (EK1, EK2, ...) ou plus afin de déterminer s'ils concordent entre eux, et comparaison des deux résultats de clé complémentaire (EK1', EK2', ...) ou plus afin de déterminer s'ils concordent entre eux,
- en cas de concordance des deux résultats de clé (EK1, EK2, ...) ou plus et des deux résultats de clé complémentaire (EK1', EK2', ...) ou plus, délivrance de l'un des ou d'au moins l'un des résultats de clé (EK1, EK2, ...) en tant que résultat (E),
- le cas contraire, inhibition de la délivrance d'un résultat (E) et, en option, délivrance d'un code d'erreur au lieu de la délivrance du résultat.

2. Procédé selon la revendication 1, la mesure de défense comportant en outre une mesure de vérification de clé, comprenant :

- vérification de la clé (K) et de la clé complémentaire (K'), respectivement afin de déterminer si elle a été manipulée,
- dans le cas où la clé (K) et la clé complémentaire (K'), conformément à la vérification, n'ont pas été manipulées, délivrance de l'un des ou d'au moins l'un des résultats de clé (EK1, EK2, ...) en tant que résultat (E),
- le cas contraire, inhibition de la délivrance d'un résultat (E) et, en option, délivrance d'un code d'erreur au lieu de la délivrance du résultat.

3. Procédé selon l'une des revendications précédentes, la mesure de calcul comprenant que (i) une exécution du calcul avec la date (D) et la clé (K) et (ii) une exécution du calcul avec la date (D) et la clé complémentaire (K') sont respectivement exécutées en alternance, (iii) la clé (K) ou la clé complémentaire (K') étant spécifiée au début de la mesure de calcul pour la première exécution du calcul et (iv) à chaque exécution suivante du calcul, la clé (K ou K') à utiliser étant générée en complétant la clé (K' ou K) qui vient d'être utilisée lors de l'exécution du calcul.

4. Procédé selon la revendication 3, (iii) la clé (K) ou la clé complémentaire (K') étant spécifiée aléatoirement au début de la mesure de calcul pour la première exécution du calcul.

**5.** Procédé selon la revendication 3 ou 4, le dispositif à processeur comprenant un registre de clés et une unité XOR associée au registre de clés, et :

- la clé spécifiée selon (iii) étant chargée dans un registre de clés au début de la mesure de calcul,
- lors de l'exécution de la mesure de calcul :
- en (i) et (ii), l'exécution du calcul étant effectuée avec la clé (K) ou la clé complémentaire (K'), et
- en (iv), à chaque exécution ultérieure du calcul, la clé (K ou K') à utiliser étant générée en complétant la clé (K' ou K) qui vient d'être utilisée lors de l'exécution du calcul en acheminant à l'unité XOR le contenu du registre de clés et un élément de complément qui est seulement formé de uns binaires, en générant à partir de là, avec l'unité XOR, le complément à un du contenu du registre de clés et en réenregistrant dans le registre de clés le complément à un généré,
- de sorte que chaque exécution du calcul avec clé (K) ou la clé complémentaire (K') est notamment effectuée en utilisant le même registre de clés qui est occupé (chargé) en alternance avec la clé (K) et la clé complémentaire (K').

**6.** Procédé selon la revendication 5, l'élément de complément étant acheminé au registre de clés : soit depuis l'extérieur du dispositif à processeur, soit depuis une mémoire établie à l'intérieur du dispositif à processeur.

**7.** Procédé selon l'une des revendications précédentes, la mesure de défense comprenant soit seulement une mesure de comparaison des résultats, soit à la fois une mesure de comparaison des résultats et une mesure de vérification de clé.

**8.** Procédé selon l'une des revendications précédentes, l'algorithme cryptographique étant réalisé sous la forme d'une norme de cryptage avancée (Advanced Encryption Standard AES) ou d'une norme de cryptage de donnée (Data Encryption Standard DES) ou d'un autre algorithme cryptographique symétrique.

**9.** Procédé selon l'une des revendications précédentes, l'exécution du calcul cryptographique étant réalisé sous la forme d'un chiffrement, d'un déchiffrement, d'une formation de signature ou d'une vérification de signature.

Prozessoreinrichtung mit XOR-Operation

Fig. 1

Prozessoreinrichtung mit 1-Komplement

Fig. 2

Lade K bzw. K'

2.1
3.1                          XOR                    PR

| j = 0: | K |
| j = 1: | K' |

D ─────────────→ AES ────────→         2.2    j = 0:  E
                                       3.2    j = 1:  E'

Komplementiere Schlüsselregister     PR

XOR  2.3
     3.3

| j = 0: | K' |
| j = 1: | K |

D ─────────────→ AES ────────→         2.4    j = 0:  E'
                                       3.4    j = 1:  E

ja          Schlüssel-          nein
            register
            konsitent?

E              2.5              Fehlercode
               3.5

# Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2675103 A2
- US 20110103584 A1
- US 8453238 B2